(19) Europäisches Patentamt
European Patent Office
Office européen des brevets

(11) **EP 3 672 910 B1**

(12) **EUROPÄISCHE PATENTSCHRIFT**

(45) Veröffentlichungstag und Bekanntmachung des Hinweises auf die Patenterteilung:
**21.07.2021 Patentblatt 2021/29**

(21) Anmeldenummer: **17757534.7**

(22) Anmeldetag: **23.08.2017**

(51) Int Cl.:
*C01B 33/027* (2006.01)      *B01J 8/18* (2006.01)
*B01J 8/44* (2006.01)

(86) Internationale Anmeldenummer:
**PCT/EP2017/071258**

(87) Internationale Veröffentlichungsnummer:
**WO 2019/037850 (28.02.2019 Gazette 2019/09)**

(54) **WIRBELSCHICHTREAKTOR ZUR HERSTELLUNG VON POLYKRISTALLINEM SILICIUMGRANULAT**

FLUIDIZED BED REACTOR FOR PRODUCTION OF GRANULAR POLYCRYSTALLINE SILICON

RÉACTEUR À LIT TOURBILLONNANT POUR LA PRÉPARATION DE SILICIUM POLYCRISTALLIN GRANULAIRE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**01.07.2020 Patentblatt 2020/27**

(73) Patentinhaber: **Wacker Chemie AG**
**81737 München (DE)**

(72) Erfinder:
• **PEDRON, Simon**
**39012 Meran (IT)**
• **BAUMANN, Bernhard**
**84547 Emmerting (DE)**
• **FORSTPOINTNER, Gerhard**
**84556 Kastl (DE)**

(74) Vertreter: **Belz, Ferdinand et al**
**Wacker Chemie AG**
**Hanns-Seidel-Platz 4**
**81737 München (DE)**

(56) Entgegenhaltungen:
**EP-A2- 2 653 446      WO-A1-2014/184043**
**WO-A1-2015/197498      WO-A1-2017/092985**

**Beschreibung**

Die Erfindung betrifft einen Wirbelschichtreaktor zur Herstellung von polykristallinem Siliciumgranulat.

Polykristallines Siliciumgranulat wird in einem Wirbelschicht- bzw. Fließbettreaktor produziert. Dies geschieht durch Fluidisierung von Silicium-Keimpartikeln mittels einer Gasströmung in einer Wirbelschicht, wobei diese über eine Heizvorrichtung auf hohe Temperaturen aufgeheizt wird. Durch Zugabe eines siliciumhaltigen Reaktionsgases kommt es zu einer Abscheidereaktion an der heißen Partikeloberfläche, wobei sich elementares Silicium auf den Keimpartikeln abscheidet. Die Keimpartikel wachsen dadurch im Durchmesser an. Durch den regelmäßigen Abzug von angewachsenen Partikeln und Zugabe weiterer Silicium-Keimpartikel kann das Verfahren kontinuierlich betrieben werden. Als siliciumhaltiges Reaktionsgas können beispielsweise Silicium-Halogenverbindungen (z.B. Chlorsilane oder Bromsilane), Monosilan ($SiH_4$) und Mischungen dieser Gase mit Wasserstoff eingesetzt werden.

Abscheideverfahren und Vorrichtungen zu deren Durchführung sind hinlänglich bekannt. Beispielsweise kann auf US4786477A und US4900411A verwiesen werden.

Ein allgemeines Problem bei Wirbelschichtreaktoren kann in einer Kontamination der Wirbelschicht und damit des polykristallinen Siliciumgranulats bei Betriebstemperatur des Reaktors bestehen. Solche Kontaminationen werden insbesondere durch Materialien hervorgerufen, aus welchen der Reaktor, insbesondere das Reaktorrohr, in dessen Innerem die Abscheidung stattfindet, konstruiert ist. Beispielsweise hat sich herausgestellt, dass Nickel aus nickelhaltigen Stählen in die Wirbelschicht diffundiert und das Siliciumgranulat verunreinigt. Weitere Edelstahlkomponenten mit hohem Kontaminationspotential sind Eisen und Chrom.

Um derartige Kontaminationen zu verhindern oder zumindest zu minimieren können beispielsweise keramische Auskleidungen bzw. Beschichtungen eingesetzt werden. So beschreibt WO2015/197498A1 einen Wirbelschichtreaktor mit einem Reaktorrohr, dessen Grundkörper zu mindestens 60 Gew.-% aus Siliciumcarbid besteht und auf seiner Innenseite eine Beschichtung aufweist, die zu mindestens 99,99 Gew.-% aus Siliciumcarbid besteht. Problematisch ist, dass die keramische Auskleidung über ihre gesamte Länge thermischen und mechanischen Spannungen ausgesetzt ist, in deren Folge es zu mechanischen Fehlstellen kommen kann.

Die genannten thermischen und mechanischen Spannungen sind ein weiteres allgemeines Problem bei Wirbelschichtreaktoren. Bei den mechanischen Spannungen handelt es sich insbesondere um Druckspannungen, die durch eine Einspannung des Reaktorrohres zwischen einem Reaktorkopf und -boden hervorgerufen werden können. Die thermischen Spannungen werden insbesondere durch axiale Temperaturgradienten hervorgerufen. Diese Temperaturgradienten treten üblicherweise dann auf, wenn das Reaktorrohr lokal begrenzt, insbesondere im Bereich der Wirbelschicht, beheizt wird. Axiale Temperaturgradienten können besonders zwischen einer beheizten Wirbelschichtzone des Reaktorrohrs und gekühlten Einspannungen (z.B. Reaktorkopf und -boden) auftreten und zu Rissen in Umfangsrichtung oder in Längsrichtung führen.

Grundsätzlich können, um mechanische und thermische Belastungen zu verteilen und abzuführen, Rohrabschnitte aus einem keramischen, graphitischen oder quarzbasierten Werkstoff durch Metallsegmente zumindest einseitig flankiert werden. Die Metallsegmente können jedoch eine Kontaminationsquelle darstellen. So neigen beispielsweise weiche Metalle dazu, sich durch Kontakt mit den fluidisierten Siliciumpartikeln abzunutzen (Abrieb). Die Siliciumpartikel können durch die abgeriebenen Metallpartikel kontaminiert werden. Durch den Abrieb können ferner Risse in den metallischen Segmenten auftreten. Deren Instandhaltung erfordert einen Stillstand des Reaktors.

EP 2 653 446 A2, WO 2017/092985 A1 und WO2014/184043 A1 beschreiben Wirbelschichtreaktoren zur Herstellung von granularem Silicium gemäß dem Überbegriff von Anspruch 1.

WO2002/40400A1 offenbart einen Reaktor zur Herstellung von hochreinem granularem Silicium durch Zersetzung eines siliciumhaltigen Gases. Der Reaktor besteht aus einem kohlefaserverstärkten Werkstoff auf Basis von Siliciumcarbid. Dabei bestehen die wärmeisolierenden Bereiche am Boden und am Kopf des Reaktors aus einem kohlefaserverstärkten Siliciumcarbid-Werkstoff mit einer geringeren Wärmeleitfähigkeit, während die übrigen Bereiche aus einem kohlefaserverstärkten Siliciumcarbid-Werkstoff mit hoher Wärmeleitfähigkeit bestehen. Auf diese Weise sollen Thermospannungen weitestgehend vermieden werden.

Problematisch ist, dass ein solches Reaktorrohr Einschränkungen bezüglich der Gasdichtheit gegenüber einem sich in einem Zwischenmantel des Reaktors befindlichen Inertgases aufweisen kann. Zudem ist mit einer Kontamination des Siliciumgranulats mit Kohlenstoff, der aus dem Siliciumcarbid stammt, zu rechnen.

WO2014/099502A1 beschreibt Auskleidungen zur Verwendung in Wirbelschichtreaktoren zur pyrolytischen Zersetzung von siliciumhaltigem Gas. Die Auskleidung ist im Inneren des Reaktorrohrs angeordnet und zumindest zweiteilig aufgebaut. Sie umfasst einen mittleren Abschnitt aus einem kontaminationsarmen Nichtmetall, beispielsweise Quarz oder Siliciumcarbid, sowie einen unteren Abschnitt, der eine Oberfläche aus einer martensitischen Stahllegierung aufweist.

Nachteilig ist, dass es beim Abkühlen oder aufgrund der unterschiedlichen Wärmeausdehnung der beiden Werkstoffe auch während des Prozesses zu Beschädigungen wie Abplatzungen oder Ausbrüchen bis hin zu Materialversagen kommen kann.

Der Erfindung lag daher die Aufgabe zugrunde, einen Wirbelschichtreaktor zur Herstellung von polykristallinem Siliciumgranulat bereitzustellen, der die aus dem Stand der Technik bekannten Nachteile umgeht.

Diese Aufgabe wird gelöst durch einen Wirbelschichtreaktor zur Herstellung von polykristallinem Siliciumgranulat, umfassend ein zwischen einem Reaktorkopf und einem Reaktorboden angeordnetes segmentiertes Reaktorrohr, eine Heizvorrichtung, zumindest eine Düse zur Zuführung von Fluidisierungsgas, zumindest eine Düse zur Zuführung von siliciumhaltigem Reaktionsgas, eine Vorrichtung zur Zuführung von Silicium-Keimpartikeln, eine Produktentnahmeleitung sowie eine Abgasentnahmeleitung, dadurch gekennzeichnet, dass das segmentierte Reaktorrohr ein Basissegment und zumindest ein Distanzsegment umfasst und zwischen dem Basissegment und dem Distanzsegment eine Flachdichtung aus einem kohlenstoffhaltigen Material angeordnet ist, wobei das Distanzsegment aus einem Material besteht, das in einem Temperaturbereich von 100 bis 950°C eine Wärmeleitfähigkeit von < 2 W/mK aufweist.

Bevorzugt weist das Material des Distanzsegments eine Wärmeleitfähigkeit von weniger als 2 W/mK in einem Temperaturbereich von 150 bis 800°C, besonders bevorzugt 250 bis 600°C, auf.

Bei dem Material des Distanzsegments handelt es sich vorzugsweise um ein Quarzglas (engl.: fused silica oder fused quartz), insbesondere um ein reines, weiß-opakes oder schwarzes Quarzglas. Das Quarzglas besteht vorzugsweise aus amorphem Siliciumdioxid, welches insbesondere aus Quarzit gewonnen wird. Besonders bevorzugt weist das Material des Distanzsegments keine weiteren Zusatzstoffe außer Silicium auf. Bei weiß-opakem Quarzglas handelt es sich um Quarzglas, welches durch Gaseinschlüsse im Material weiß-opak erscheint. Bei schwarzem Quarzglas handelt es sich um ein Quarzglas, das einen Anteil an freiem Silicium aufweist.

Das Basissegment besteht vorzugsweise aus einem Material, das in einem Temperaturbereich von 500 bis 1400°C, bevorzugt 600 bis 1250°C, eine Wärmeleitfähigkeit zwischen 20 und 100 W/mK, bevorzugt zwischen 30 und 90 W/mK, besonders bevorzugt zwischen 40 und 80 W/mK, aufweist.

Das Material des Basissegments ist vorzugsweise ausgewählt aus der Gruppe mit Silicium, Siliciumnitrid ($Si_3N_4$), Siliciumcarbid (SiC), Stahl, Graphit, Kohlenstoff-Kohlenstoff-Kompositwerkstoff (z.B. kohlenstofffaserverstärkter Kohlenstoff).

Bevorzugt handelt es sich bei dem Material des Basissegments um gesintertes SiC, nitridgebundenes SiC, rekristallisiertes SiC oder reaktionsgebundenes SiC. Auch Mischungen daraus sind denkbar.

Besonders bevorzugt handelt es sich bei dem Material des Basissegments um isostatisch gepressten Graphit oder um eine gewickelte Graphitfolie.

Ferner kann es bevorzugt sein, dass das Basissegment und/oder das Distanzsegment eine Beschichtung aufweisen. Die Beschichtung ist vorzugsweise an einer Innenwand (also einer in das Reaktorinnere gerichteten Wand) angebracht. Besonders bevorzugt weist das Basissegment an seiner Innenwand eine Beschichtung aus SiC, $Si_3N_4$ oder Silicium auf. Auch eine Beschichtung des gesamten Segments ist möglich.

Bei dem kohlenstoffhaltigen Material der Flachdichtung handelt es sich vorzugsweise um Graphit, insbesondere um expandierten Graphit. Bei einer Flachdichtung handelt es sich im Allgemeinen um eine im Wesentlichen zylinderförmige Dichtung, deren Abmessungen über die Innen- und Außendurchmesser sowie die Dicke definiert sind. Bevorzugt liegt das Verhältnis zwischen Außen- und Innendurchmesser zwischen 1 und 1,2, besonders bevorzugt zwischen 1,02 und 1,10. Die Dicke beträgt vorzugsweise 1 bis 10 mm, bevorzugt 1,5 bis 5 mm.

Das Basissegment bildet einen Abschnitt des Reaktorrohres, in welchem im Betrieb des Wirbelschichtreaktors die Wirbelschicht lokalisiert ist, wobei sich die Wirbelschicht nicht notwendigerweise über den gesamten Abschnitt erstreckt. Der Ort, an dem die Wirbelschicht lokalisiert ist, kann auch als Reaktionszone bezeichnet werden. Aufgrund der Wärmeleitfähigkeit des Basissegments kann die in der Reaktionszone benötigte Wärme effektiv von der Heizvorrichtung, welche dem Basissegment zugeordnet ist, zugeführt werden.

Das Distanzsegment schließt sich (über die dazwischen angeordnete Flachdichtung) an das Basissegment an und bildet einen Abschnitt des Reaktorrohres, in welchem im Betrieb des Reaktors eine niedrigere Temperatur herrscht als in der Reaktionszone. Eine Temperatur von 950°C wird in diesem Abschnitt in der Regel nicht überschritten. Die Temperatur im Bereich des Distanzsegments liegt üblicherweise zwischen 20°C (in der Nähe des Reaktorkopfs bzw. -boden) und 500°C (im Bereich der Flachdichtung). Vorzugsweise ist diesem Abschnitt keine Heizvorrichtung zugeordnet. Ein oberes Ende (in Richtung des Reaktorkopfes) und/oder ein unteres Ende (in Richtung des Reaktorbodens) der Wirbelschicht kann sich in den Abschnitt des Reaktorrohres erstrecken, der von dem Distanzsegment gebildet wird. Insbesondere kann sich das untere Ende der Wirbelschicht in den Abschnitt des Reaktorrohres erstrecken, der von einem zwischen Reaktorboden und Basissegment angeordneten Distanzsegment gebildet wird. Das untere Ende der Wirbelschicht kann bis zum Reaktorboden reichen.

Temperaturen an einer Außenseite oder Innenseite des Reaktorrohrs können grundsätzlich mittels Pyrometern (Spektral- oder Quotientenpyrometer) oder Thermoelementen bestimmt werden. Für eine Temperaturbestimmung mittels Pyrometern können Schaugläser im Reaktorbehälter und/oder Reaktorrohr angeordnet sein. Die Schaugläser bestehen üblicherweise aus Quarzglas, Borosilikatglas, $BaF_2$, Saphirglas, ZnSe, ZnS, $CaF_2$, $BaF_2$ oder $MgF_2$.

Thermoelemente können an verschiedenen axialen Positionen und ggf. verschiedenen tangentialen Positionen des äußeren Reaktorrohres angeordnet sein. Mindestens zwei solcher Messungen an verschiedenen axialen Positionen sind üblich.

Gemäß einer bevorzugten Ausführungsform umfasst das Reaktorrohr ein weiteres Distanzsegment, welches sich an das Basissegment anschließt, wobei zwischen dem Basissegment und dem weiteren Distanzsegment vorzugsweise ebenfalls eine Flachdichtung aus einem kohlenstoffhaltigen Material angeordnet ist.

Vorzugsweise besteht das Reaktorrohr aus drei Segmenten, insbesondere einem Basis- und zwei Distanzsegmenten.

Das Reaktorrohr ist bevorzugt zwischen dem Reaktorboden und dem Reaktorkopf eingespannt. Dementsprechend können Reaktorkopf und Reaktorboden auch als Einspannungen bezeichnet werden. Unter "eingespannt" soll verstanden werden, dass das Reaktorrohr in axialer Richtung mit einem Druck beaufschlagt wird. Zur Einspannung können Spannfedern und Kompensatoren eingesetzt werden.

Zwischen dem Reaktorboden und dem Reaktorrohr und/oder zwischen dem Reaktorkopf und dem Reaktorrohr ist vorzugsweise eine Dichtung aus einem kohlenstoffhaltigen Material angeordnet. Bevorzugt handelt es sich bei der Dichtung ebenfalls um eine Flachdichtung wie sie oben beschrieben ist. Es kann sich allerdings auch um eine O-ringförmige Dichtung handeln, die insbesondere aus denselben Materialen bestehen kann wie die beschriebene Flachdichtung.

Bevorzugt weist der Reaktorboden und/oder der Reaktorkopf Aussparungen zur Aufnahme der Dichtung auf. Ein Kontakt der Dichtung mit dem Reaktorinneren kann auf diese Weise vermieden werden. Dies wirkt sich positiv auf die Haltbarkeit der Dichtung aus und verringert zudem die Gefahr von Kontaminationen des Produkts.

Vorzugsweise schließt sich das Distanzsegment, gegebenenfalls über eine dazwischen angeordnete Dichtung, an den Reaktorkopf oder den Reaktorboden an. Anders ausgedrückt bildet das Distanzsegment zumindest einseitig den Abschluss des Reaktorrohres.

Der Reaktorkopf und/oder der Reaktorboden bzw. die Einspannungen verfügen vorzugsweise über einen Kühlmittelkreislauf. Bevorzugt verfügen sowohl der Reaktorkopf als auch der Reaktorboden über einen separaten Kühlmittelkreislauf. Als Kühlmittel wird vorzugsweise Wasser eingesetzt. Die Temperatur des Kühlmittels kann durch Messung der Temperatur des Kühlmittels, beispielsweise mit Widerstandsthermometern, an einem Kühlmitteleinlass und einem Kühlmittelauslass bestimmt werden.

Bedingt durch die Anordnung der Wirbelschicht im Reaktorrohr, gibt es einen Wärmefluss von der Reaktionszone hin zu dem üblicherweise gekühlten Reaktorkopf und dem Reaktorboden bzw. zu den Einspannungen. Vereinfacht ausgedrückt wird im Bereich der Mitte des Reaktorrohres beheizt, während dessen Enden gekühlt werden. Es existieren also axiale Temperaturgradienten im Reaktorrohr. Die axialen Temperaturgradienten führen am Ort ihres Auftretens zu einer mechanischen Belastung des Reaktorrohres.

Durch die erfindungsgemäße, segmentierte (mehrteilige) Ausführung des Reaktorrohrs werden axiale Temperaturgradienten weitestgehend in das Distanzsegment mit geringer Wärmeleitfähigkeit verlagert. Die geringe mittlere Wärmeleitfähigkeit des Distanzsegments von weniger als 2 W/mK führt zu einem verringerten Wärmeverlust. Insbesondere Quarzglas hat in einem Temperaturbereich zwischen 20 und 500°C eine mittlere Wärmeleitfähigkeit von nur 1,7 W/mK und kann daher den Wärmeverlust über den im Regelfall gekühlten Reaktorkopf und/oder Reaktorboden deutlich reduzieren. Durch den geringeren Wärmestrom in axiale Richtung wird entsprechend auch der axiale Temperaturgradient im Basissegment reduziert.

Ferner weist Quarzglas im Temperaturbereich zwischen 0 und 500°C einen nur geringen thermischen Ausdehnungskoeffizient von 0,4 bis $0,7*10^{-6}$ $K^{-1}$ auf. Außerdem weist Quarzglas ein nur geringes Elastizitätsmodul (E-Modul) von 50000 bis 80000 MPa auf. Dadurch sind die thermisch induzierten Spannungen in diesem Material gering.

Des Weiteren führt die Verwendung von Quarzglas zu einer Verbesserung der Produktqualität, da keine Metalle (z.B. Nickel) während der Abscheidung freigesetzt werden wie dies beispielsweise bei martensitischen Stahllegierungen der Fall sein kann. Im Gegensatz zu Segmenten aus mit SiC oder mit SiC beschichtetem Graphit kommt es bei Quarzglas ferner zu keiner Freisetzung von Kohlenstoff durch Abrieb oder durch einen chemischen Angriff des Reaktionsgases.

Durch den Einsatz der Flachdichtung zwischen Basissegment und Distanzsegment kann überraschenderweise die thermische Belastbarkeit des Reaktorrohres, insbesondere des beheizten Abschnitts, weiter erhöht werden. Das kohlenstoffhaltige Material der Flachdichtung verhindert einen direkten reibschlüssigen Kontakt zwischen den Segmenten. Das flexible Dichtungsmaterial kann unterschiedliche radiale Ausdehnungen der Segmente absorbieren. Auf diese Weise kommt es zu einer mechanischen Entkopplung der Segmente und die thermisch induzierten Spannungen, insbesondere Tangentialspannungen, im gesamten Reaktorrohr werden minimiert.

Gemäß einer weiteren Ausführungsform weisen das Basissegment und das Distanzsegment jeweils zwei Stirnseiten auf, wobei zumindest eine der Stirnseiten, zwischen denen die Flachdichtung angeordnet ist, ein Profil aufweist, wobei die Flachdichtung derart angeordnet ist, dass eine ins Reaktorinnere gewandte Seite der Flachdichtung abgeschirmt ist.

Unter "abgeschirmt" ist dabei zu verstehen, dass die Flachdichtung hinter einer Wandung des Profils derart angeordnet ist, dass die ins Reaktorinnere gewandte Seite der Flachdichtung der Wandung des Profils zugewandt ist.

Die Abschirmung der Flachdichtung führt zu einer weiteren Verringerung der Kontamination, da das kohlenstoffhaltige Material vor einem direkten Partikel- und Gaskontakt aus dem Reaktorinneren geschützt ist. Eine Freisetzung von Kohlenstoff aus dem Dichtungsmaterial durch Abrieb oder durch einen chemischen Angriff der Reaktionsgase wird auf diese Weise minimiert oder ganz verhindert.

Vorzugsweise weist das Distanzsegment 80 bis 300%, bevorzugt 100 bis 250%, besonders bevorzugt 150 bis 200%, der Wandstärke des Basissegments auf.

Ferner weist das Basissegment vorzugsweise eine Länge $L_B$ auf, die zwischen 50 und 99%, bevorzugt zwischen 60 und 98%, insbesondere zwischen 70 und 97%, einer Länge $L_R$ des Reaktorrohrs entspricht.

Beschrieben ist ferner ein Verfahren zur Herstellung von polykristallinem Siliciumgranulat, das in dem beschriebenen Wirbelschichtreaktor durchgeführt wird. Das Verfahren umfasst eine Fluidisierung von Silicium-Keimpartikeln mittels einer Gasströmung in einer Wirbelschicht, die mittels einer Heizvorrichtung aufgeheizt wird, wobei durch Zugabe eines siliciumhaltigen Reaktionsgases polykristallines Silicium an den Silicium-Keimpartikeloberflächen abgeschieden wird.

Vorzugsweise wird das entstehende polykristalline Siliciumgranulat aus dem Wirbelschichtreaktor abgeführt. Anschließend können gegebenenfalls entstandene Siliciumablagerungen an der Innenwand (Wandbelag) des Reaktorrohrs und anderen Reaktorbauteilen durch Zufuhr eines Ätzgases in die Reaktionszone entfernt werden. Das Ätzgas enthält vorzugsweise Chlorwasserstoff oder Siliciumtetrachlorid.

Ebenso ist es bevorzugt, während der Abscheidung von polykristallinem Silicium an den heißen Silicium-Keimpartikeloberflächen kontinuierlich Ätzgas zuzuführen, um Siliciumablagerungen an der Innenwand des Reaktorrohrs und anderen Reaktorbauteilen zu vermeiden. Die Zufuhr des Ätzgases erfolgt vorzugsweise lokal in der sogenannten Free Board Zone (Gasraum über der Wirbelschicht).

Der Wandbelag kann zyklisch im Wechsel mit dem Abscheideprozess durch Ätzgas entfernt werden. Alternativ kann während der Abscheidung kontinuierlich Ätzgas zugeführt werden, um die Entstehung von Wandbelag zu vermeiden.

Vorzugsweise wird das Verfahren kontinuierlich betrieben, indem durch die Abscheidung im Durchmesser angewachsene Siliciumpartikel kontinuierlich aus dem Reaktor abgeführt und frische Silicium-Keimpartikel zudosiert werden.

Als siliciumhaltiges Reaktionsgas wird vorzugsweise Trichlorsilan verwendet. Die Temperatur der Wirbelschicht in der Reaktionszone beträgt in diesem Fall mindestens 900°C und bevorzugt mindestens 1000°C. Vorzugsweise beträgt die Temperatur der Wirbelschicht mindestens 1100°C, besonders bevorzugt mindestens 1150°C, insbesondere mindestens 1200°C. Die Temperatur der Wirbelschicht in der Reaktionszone kann auch 1300 bis 1400°C betragen. Gemäß einer besonders bevorzugten Ausführungsform beträgt die Temperatur der Wirbelschicht in der Reaktionszone 1150 bis 1250°C. In diesem Temperaturbereich wird eine maximale Abscheiderate erzielt, die allerdings bei weiter steigenden Temperaturen wieder abfällt.

Ebenso kann als siliciumhaltiges Reaktionsgas Monosilan verwendet werden. Die Temperatur der Wirbelschicht in der Reaktionszone beträgt dann vorzugsweise 550 bis 850°C. Weiterhin kann als siliciumhaltiges Reaktionsgas Dichlorsilan eingesetzt werden. Die Temperatur der Wirbelschicht in der Reaktionszone beträgt dann vorzugsweise 600 bis 1000°C.

Das Fluidisierungsgas ist vorzugsweise ausgewählt aus der Gruppe mit Wasserstoff, Argon, Stickstoff und Mischungen daraus.

Das Reaktionsgas wird über eine oder mehrere Düsen in die Wirbelschicht eingebracht. Die lokalen Gasgeschwindigkeiten am Austritt der Düsen betragen vorzugsweise 0,5 bis 200 m/s. Die Konzentration des siliciumhaltigen Reaktionsgases beträgt bezogen auf die gesamte durch die Wirbelschicht strömende Gasmenge vorzugsweise 5 bis 50 mol-%, besonders bevorzugt 15 bis 40 mol-%.

Die Konzentration des siliciumhaltigen Reaktionsgases in den Reaktionsgasdüsen beträgt bezogen auf die gesamte durch die Reaktionsgasdüsen strömende Gasmenge vorzugsweise 5 bis 80 mol-%, besonders bevorzugt 14 bis 60 mol-%.

Der absolute Reaktordruck bewegt sich bevorzugt im Bereich von 1 bis 10 bar, besonders bevorzugt 1,5 bis 5,5 bar.

Bei einem Reaktor mit einem Innendurchmesser der Reaktionszone von z.B. 400 mm beträgt der Massenstrom an siliciumhaltigem Reaktionsgas vorzugsweise 30 bis 600 kg/h. Der Wasserstoffvolumenstrom beträgt bevorzugt 50 bis 500 $Nm^3$/h. Für größere Reaktoren sind größere Mengen an siliciumhaltigem Reaktionsgas und Wasserstoff bevorzugt.

Es ist bekannt, dass bestimmte Prozessparameter in Abhängigkeit von der Reaktorgröße ausgewählt werden. Im Folgenden sind daher auf eine Reaktorquerschnittsfläche normierte Betriebsparameter genannt.

Der spezifische Massenstrom an siliciumhaltigem Reaktionsgas beträgt vorzugsweise 400 bis 6500 kg/(h*$m^2$). Der spezifische Wasserstoffvolumenstrom beträgt vorzugsweise 800 bis 4000 $Nm^3$/(h*$m^2$). Das spezifische Wirbelbettgewicht beträgt vorzugsweise 700 bis 2000 kg/$m^2$. Die spezifische Silicium-Keimpartikeldosierrate beträgt vorzugsweise 1 bis 100kg/(h*$m^2$). Die spezifische Reaktorheizleistung beträgt vorzugsweise 800 bis 3000 kW/$m^2$. Die Verweilzeit des Reaktionsgases in der Wirbelschicht beträgt vorzugsweise 0,1 bis 10 s, besonders bevorzugt 0,2 bis 5 s.

Fig. 1: Schematischer Aufbau eines Wirbelschichtreaktors

Fig. 2 bis 5: Schnittdarstellungen eines Reaktorrohrs gemäß bevorzugter Ausführungsformen eines erfindungsgemäßen Wirbelschichtreaktors

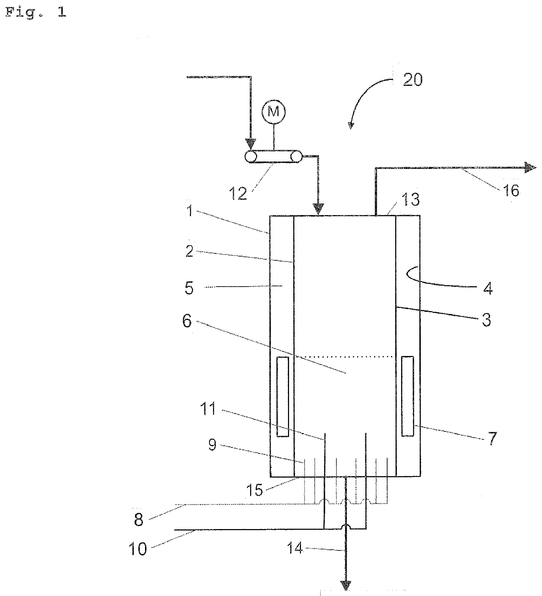

**Fig. 1** zeigt einen Wirbelschichtreaktor 20, der einen Reaktorbehälter 1 umfasst, in welchen ein segmentiertes Reaktorrohr 2 eingesetzt ist (die Segmentierung ist nicht dargestellt). Das Reaktorrohr 2 ist zwischen einem Reaktorkopf 13 und einem Reaktorboden 15 eingespannt. Zwischen einer Innenwand 4 des Reaktorbehälters 2 und einer Außenwand 3 des Reaktorrohrs 2 befindet sich ein Zwischenraum 5. Dieser beinhaltet üblicherweise Isolationsmaterial und kann mit einem Inertgas gefüllt sein. Der Druck im Zwischenraum 5 ist höher als im Inneren des Reaktorrohrs 2. Im Betrieb des Reaktors 20 befindet sich eine Wirbelschicht 6 innerhalb des durch gestrichelte Linien gekennzeichneten Bereichs. Die Wirbelschicht 6 wird mittels einer Heizvorrichtung 7 geheizt. Über eine Leitung 8 und Düsen 9 wird dem Reaktionsrohr 2 ein Fluidisierungsgas zugeführt. Über eine Leitung 10 und Düsen 11 erfolgt die Zuführung eines Reaktionsgasgemischs. Die Höhe der Düsen 11 zur Zuführung des Reaktionsgasgemischs kann sich von der Höhe der Düsen 9 zur Zuführung des Fluidisierungsgases unterscheiden.

Über eine Vorrichtung 12 werden dem Reaktorrohr 2 am Reaktorkopf 13 Silicium-Keimpartikel zugeführt. Fertiges Polysilicium-Granulat wird über eine Produktentnahmeleitung 14 am Reaktorboden 15 entnommen. Am Reaktorkopf 13 wird ferner Abgas über eine Abgasentnahmeleitung 16 abgeführt.

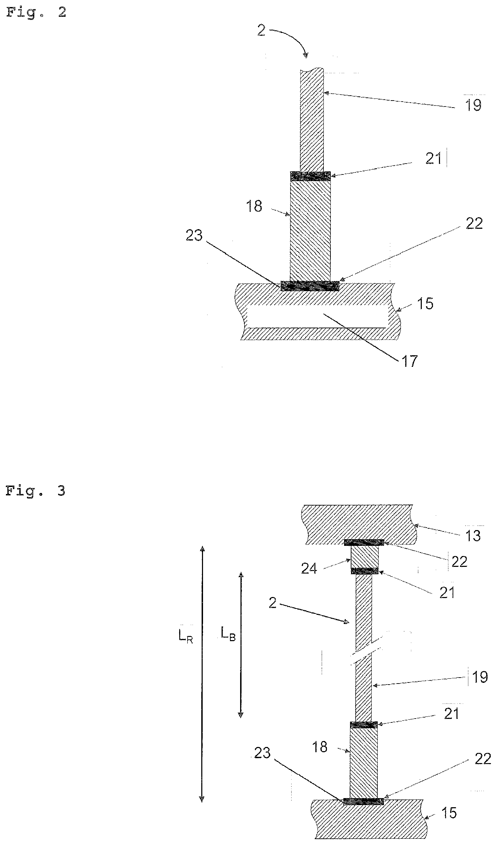

**Fig. 2** zeigt eine Schnittdarstellung des segmentierten Reaktorrohrs 2 im Bereich des Reaktorbodens 15 gemäß einer bevorzugten Ausführungsform des erfindungsgemäßen Wirbelschichtreaktors.

Bei dem Reaktorboden 15 handelt es sich um eine Bodenplatte, die einen Kühlkreislauf 17 umfasst. Das Reaktorrohr ist zwischen dem Reaktorboden 15 und dem nicht dargestellten Reaktorkopf 13 eingespannt. Ein zylinderförmiges Distanzsegment 18 schließt sich über eine Flachdichtung 21 an ein Basissegment 19 an. Das Reaktorrohr 2 besteht also aus zwei Segmenten. Die Dicke des Distanzsegments 18 beträgt etwa 175% der Dicke des Basissegments 19. Zwischen dem Distanzsegment 18 und dem Reaktorboden 15 ist eine Dichtung 22 angeordnet, welche teilweise in eine Aussparung 23 im Reaktorboden 15 eingelassen ist.

**Fig. 3** zeigt eine Schnittdarstellung des segmentierten Reaktorrohrs 2 im Bereich des Reaktorbodens 15 und des Reaktorkopfes 13 gemäß einer bevorzugten Ausführungsform des erfindungsgemäßen Wirbelschichtreaktors 20.

Im Unterschied zu der Ausführungsform gemäß Fig. 2 weist das Reaktorrohr 2 ein weiteres Distanzsegment 24 auf, welches sich über eine Flachdichtung 21 an das Basissegment 19 und über eine Dichtung 22 an den Reaktorkopf 13 anschließt. Das Reaktorrohr 2 besteht also aus drei Segmenten. Das Distanzsegment 24 ist in seiner Länge kürzer ausgeführt als das Distanzsegment 18, da die Temperatur im oberen Bereich des Reaktorrohres niedriger ist als im unteren Bereich, wenn die Heizvorrichtung 7 in der unteren Hälfte des Zwischenraums 5 angeordnet ist (vgl. Fig. 1). Die Länge $L_B$ des Basissegments beträgt etwa 85% der Gesamtlänge $L_R$ des Reaktorrohrs 2. Auf die Darstellung von Kühlkreisläufen im Reaktorkopf 13 und -boden 15 wurde verzichtet.

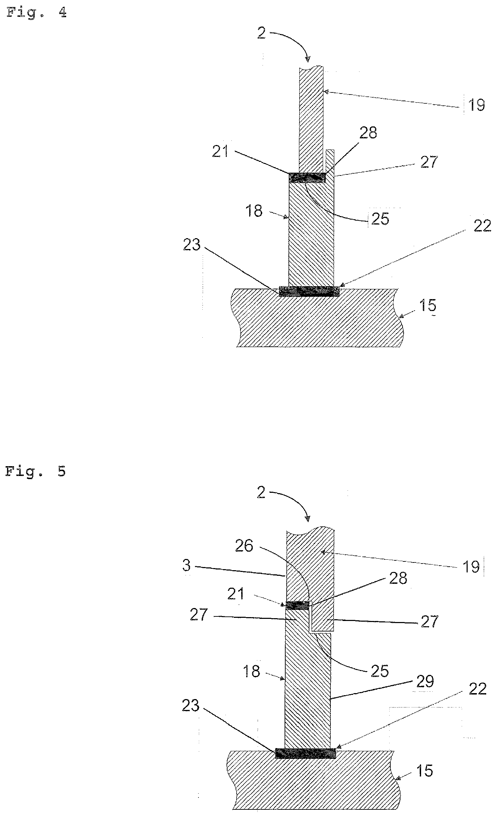

**Fig. 4** zeigt eine Schnittdarstellung des segmentierten Reaktorrohrs 2 im Bereich des Reaktorbodens 15 gemäß einer bevorzugten Ausführungsform des erfindungsgemäßen Wirbelschichtreaktors 20.

Im Unterschied zu der Ausführung gemäß Fig. 2 weist das Distanzsegment 18 an einer dem Basissegment 19 zugewandten Stirnseite 25 ein Profil 27 auf. Die Flachdichtung 21 ist hinter dem Profil 27 angeordnet, so dass eine dem Reaktorinneren (rechte Seite des Reaktorrohrs 2) zugewandte Seite 28 der Flachdichtung abgeschirmt ist.

**Fig. 5** zeigt eine Schnittdarstellung des segmentierten Reaktorrohrs 2 im Bereich des Reaktorbodens 15 gemäß einer bevorzugten Ausführungsform des erfindungsgemäßen Wirbelschichtreaktors 20.

Sowohl die Stirnseite 25 des Distanzsegments 18 als auch eine Stirnseite 26 des Basissegments weisen ein Profil 27 auf. Das Distanzsegment 18 und das Basissegment 19 haben etwa dieselbe Wandstärke. Die Profile 27 werden mit einer dazwischen angeordneten Flachdichtung 21 derart zusammengefügt, dass das Basissegment 19 und das Distanzsegment 18 an der Außenwand 3 des Reaktorrohres 2 bündig sind. Auch an einer Innenwand 29 des Reaktorrohres 2 sind die Segmente 18, 19 im Wesentlichen bündig. Die Flachdichtung 21 ist wie in der Ausführung gemäß Fig. 4 durch die Profilierung der Stirnseiten 25, 26 abgeschirmt.

**Vergleichsbeispiel**

Ein Wirbelschichtreaktor mit einem nicht-segmentierten Reaktorrohr und einem Reaktorboden mit Kühlwasserkreislauf wird mit Trichlorsilan bei einer Wirbelschichttemperatur von 900°C betrieben. Bei einem Durchmesser des Reaktorrohres von 0,8 m Gesamtlänge von 2,5 m kann eine Silicium-Abscheiderate von 63,3 kg/h Silicium-Granulat erzielt werden. Als Reaktorrohrmaterial wird Graphit mit einer SiC-Beschichtung eingesetzt. Der Temperaturgradient im Reaktorrohr beträgt maximal 4050 K/m und befindet sich zwischen einer Unterkante der Heizvorrichtung (vgl. Fig. 1) und dem Reaktorboden. Der axiale Wärmestrom in den gekühlten Reaktorboden beträgt 5,09 kW. Eine weitere Steigerung der Wirbelschichttemperatur und damit der Abscheiderate ist nicht möglich, da das Reaktorrohr zwischen Heizvorrichtung und Reaktorboden (maximaler Temperaturgradient) reißen würde.

**Beispiel**

Ein Wirbelschichtreaktor gemäß Fig. 4 (Reaktorrohr aus zwei Segmenten, ansonsten baugleich) kann mit Trichlorsilan dagegen bei einer Wirbelschichttemperatur von 1050°C betrieben werden. Das Basissegment besteht aus mit SiC beschichtetem Graphit. Das Distanzsegment besteht aus opakem Quarzglas. Dazwischen ist eine Flachdichtung aus expandiertem Graphit angeordnet. Zwischen Reaktorboden und Distanzsegment befindet sich eine Flachdichtung aus einem Fluoreleastomer (Viton®). Der Rohrabschnitt aus Quarz wird so dimensioniert, dass die dem Distanzsegment zugewandte Stirnseite des Basissegments eine Temperatur von etwa 650°C erreicht. Das Distanzsegment hat eine Länge von 45 mm. Der maximale axiale Temperaturgradient im Reaktorrohr wird auf 3420 K/m reduziert. Die Abscheiderate konnte auf 93,4 kg/h Silicium-Granulat erhöht werden. Eine weitere Steigerung der Abscheiderate ist noch möglich. Der axiale Verlustwärmestrom in den gekühlten Reaktorboden beträgt 0,5 kW.

Der Verlustwärmestrom lässt sich mittels einer Wärmebilanz am Kühlkreislauf des Reaktorbodens gemäß folgender Formel berechnen.

$$\dot{Q}_{Constraint} = \dot{m}_{CW}\bar{c}_{P.CW}(T_{CW,out} - T_{CW,in})$$

$\dot{Q}_{Constraint}$: Wärmemenge über die Einspannung [W]
**CW (Index):** Kühlwasser (engl.: cooling water)
$\dot{m}_{CW}$: Massenstrom Kühlwasser zur Kühlung der Einspannung [kg/s]
$\bar{c}_{P.CW}$: Mittlere spezifische Wärmekapazität des genannten Kühlwassers [J/(kg K)]
$T_{CW,in}$: Eintrittstemperatur des Kühlwassers [K]
$T_{CW,out}$: Austrittstemperatur des Kühlwassers [K]

**Patentansprüche**

1. Wirbelschichtreaktor (20) zur Herstellung von polykristallinem Siliciumgranulat, umfassend ein zwischen einem Reaktorkopf (13) und einem Reaktorboden (15) angeordnetes segmentiertes Reaktorrohr (2), eine Heizvorrichtung (7), zumindest eine Düse (9) zur Zuführung von Fluidisierungsgas, zumindest eine Düse (10) zur Zuführung von siliciumhaltigem Reaktionsgas, eine Vorrichtung (12) zur Zuführung von Silicium-Keimpartikeln, eine Produktentnahmeleitung (14) sowie eine Abgasentnahmeleitung (16), **dadurch gekennzeichnet, dass** das Reaktorrohr (2) ein Basissegment (19) und zumindest ein Distanzsegment (18) umfasst und zwischen Basissegment (19) und Distanzsegment (18) eine Flachdichtung (21) aus einem kohlenstoffhaltigen Material angeordnet ist, wobei das Distanzsegment (18) aus einem Material besteht, das in einem Temperaturbereich von 100 bis 950°C eine Wärmeleitfähigkeit von < 2 W/mK aufweist.

2. Wirbelschichtreaktor nach Anspruch 1, **dadurch gekennzeichnet, dass** es sich bei dem Material des Distanzsegments (18) um ein Quarzglas handelt.

3. Wirbelschichtreaktor nach Anspruch 1 oder 2, **dadurch gekennzeichnet, dass** das Basissegment (19) aus einem Material besteht, das in einem Temperaturbereich von 500 bis 1400°C eine Wärmeleitfähigkeit zwischen 20 und 100 W/mK, bevorzugt zwischen 30 und 90 W/mK, besonders bevorzugt zwischen 40 und 80 W/mK, aufweist.

4. Wirbelschichtreaktor nach einem der vorhergehenden Ansprüche, **dadurch gekennzeichnet, dass** das Material des Basissegments (19) ausgewählt ist aus der Gruppe mit Silicium, Siliciumnitrid, Siliciumcarbid, Stahl, Graphit, kohlenstofffaserverstärkter Kohlenstoff und Kohlenstoff-Kohlenstoff-Kompositwerkstoff.

5. Wirbelschichtreaktor nach Anspruch 4, **dadurch gekennzeichnet, dass** es sich bei dem Material des Basissegments (19) um isostatisch gepressten Graphit handelt.

6. Wirbelschichtreaktor nach einem der vorhergehenden Ansprüche, **dadurch gekennzeichnet, dass** das Basissegment (19) und/oder das Distanzsegment (18) eine Beschichtung aufweisen.

7. Wirbelschichtreaktor nach einem der vorhergehenden Ansprüche, **dadurch gekennzeichnet, dass** es sich bei dem kohlenstoffhaltigen Material der Flachdichtung (21) um Graphit, insbesondere expandierten Graphit, handelt.

8. Wirbelschichtreaktor nach einem der vorhergehenden Ansprüche, **dadurch gekennzeichnet, dass** das Reaktorrohr (2) ein weiteres Distanzsegment (24) umfasst, welches sich an das Basissegment (19) anschließt, wobei zwischen Basissegment (19) und dem weiteren Distanzsegment (24) ebenfalls eine Flachdichtung (21) aus einem kohlenstoffhaltigen Material angeordnet ist.

9. Wirbelschichtreaktor nach einem der vorhergehenden Ansprüche, **dadurch gekennzeichnet, dass** das Reaktorrohr (2) zwischen dem Reaktorboden (15) und dem Reaktorkopf (13) eingespannt ist.

10. Wirbelschichtreaktor nach einem der vorhergehenden Ansprüche, **dadurch gekennzeichnet, dass** zwischen Reaktorboden (15) und Reaktorrohr (2) und/oder zwischen Reaktorkopf (13) und Reaktorrohr (2) eine Dichtung (22) aus einem kohlenstoffhaltigen Material angeordnet ist.

**11.** Wirbelschichtreaktor nach Anspruch 10, **dadurch gekennzeichnet, dass** der Reaktorboden (15) und/oder der Reaktorkopf (13) eine Aussparung (23) zur Aufnahme der Dichtung (22) aufweisen.

**12.** Wirbelschichtreaktor nach einem der vorhergehenden Ansprüche, **dadurch gekennzeichnet, dass** das Basissegment (19) und das Distanzsegment (18) jeweils zwei Stirnseiten aufweisen, wobei zumindest eine der Stirnseiten (25, 26), zwischen denen die Flachdichtung (21) angeordnet ist, ein Profil (27) aufweist, wobei die Flachdichtung (21) hinter einer Wandung des Profils (27) derart angeordnet ist, dass eine ins Reaktorinnere gewandte Seite (28) der Flachdichtung (21) der Wandung des Profils zugewandt ist.

**13.** Wirbelschichtreaktor nach einem der vorhergehenden Ansprüche, **dadurch gekennzeichnet, dass** das Distanzsegment (18) 80 bis 300%, bevorzugt 100 bis 250%, besonders bevorzugt 150 bis 200%, der Wandstärke des Basissegments (19) aufweist.

**14.** Wirbelschichtreaktor nach einem der vorhergehenden Ansprüche, **dadurch gekennzeichnet, dass** das Basissegment (19) eine Länge ($L_B$) aufweist, die zwischen 50 und 99%, bevorzugt zwischen 60 und 98%, insbesondere zwischen 70 und 97%, einer Länge ($L_R$) des Reaktorrohrs (2) entspricht.


**Claims**

**1.** Fluidized-bed reactor (20) for producing granular polycrystalline silicon, comprising a segmented reactor tube (2) disposed between a reactor top (13) and a reactor bottom (15), a heating facility (7), at least one nozzle (9) for supplying fluidizing gas, at least one nozzle (10) for supplying silicon-containing reaction gas, a facility (12) for supplying silicon seed particles, a product removal line (14), and an offgas removal line (16), **characterized in that** the reactor tube (2) comprises a base segment (19) and at least one spacer segment (18), there being disposed, between base segment (19) and spacer segment (18), a flat seal (21) made from a carbon-containing material, the spacer segment (18) consisting of a material which within a temperature range from 100 to 950°C has a thermal conductivity of < 2 W/mK.

**2.** Fluidized-bed reactor according to Claim 1, **characterized in that** the material of the spacer segment (18) comprises a fused silica.

**3.** Fluidized-bed reactor according to Claim 1 or 2, **characterized in that** the base segment (19) consists of a material which within a temperature range from 500 to 1400°C has a thermal conductivity of between 20 and 100 W/mK, preferably between 30 and 90 W/mK, more preferably between 40 and 80 W/mK.

**4.** Fluidized-bed reactor according to any of the preceding claims, **characterized in that** the material of the base segment (19) is selected from the group of silicon, silicon nitride, silicon carbide, steel, graphite, carbon fiber-reinforced carbon, and carbon-carbon composite material.

**5.** Fluidized-bed reactor according to Claim 4, **characterized in that** the material of the base segment (19) comprises isostatically pressed graphite.

**6.** Fluidized-bed reactor according to any of the preceding claims, **characterized in that** the base segment (19) and/or the spacer segment (18) comprise a coating.

**7.** Fluidized-bed reactor according to any of the preceding claims, **characterized in that** the carbon-containing material of the flat seal (21) comprises graphite, more particularly expanded graphite.

**8.** Fluidized-bed reactor according to any of the preceding claims, **characterized in that** the reactor tube (2) comprises a further spacer segment (24) which adjoins the base segment (19), there being likewise disposed, between base segment (19) and the further spacer segment (24), a flat seal (21) made from a carbon-containing material.

**9.** Fluidized-bed reactor according to any of the preceding claims, **characterized in that** the reactor tube (2) is fixed between the reactor bottom (15) and the reactor top (13).

**10.** Fluidized-bed reactor according to any of the preceding claims, **characterized in that**, disposed between reactor bottom (15) and reactor tube (2) and/or between reactor top (13) and reactor tube (2), there is a seal (22) made from a carbon-containing material.

**11.** Fluidized-bed reactor according to Claim 10, **characterized in that** the reactor bottom (15) and/or the reactor top (13) comprise a recess (23) for accommodating the seal (22).

**12.** Fluidized-bed reactor according to any of the preceding claims, **characterized in that** the base segment (19) and the spacer segment (18) each have two end faces, where at least one of the end faces (25, 26) between which the flat seal (21) is disposed has a profile (27), where the flat seal (21) is disposed behind a wall of the profile (27) in such a way that a flat seal (21) side (28) facing into the reactor interior faces the wall of the profile.

13. Fluidized-bed reactor according to any of the preceding claims, **characterized in that** the spacer segment (18) comprises 80 to 300%, preferably 100 to 250%, more preferably 150 to 200%, of the wall thickness of the base segment (19).

14. Fluidized-bed reactor according to any of the preceding claims, **characterized in that** the base segment (19) has a length ($L_B$) which corresponds to between 50 and 99%, preferably between 60 and 98%, more particularly between 70 and 97%, of a length ($L_R$) of the reactor tube (2).

**Revendications**

1. Réacteur à lit fluidisé (20) pour la fabrication de silicium polycristallin granulaire, comprenant un tube de réacteur segmenté (2) agencé entre une tête de réacteur (13) et un fond de réacteur (15), un dispositif de chauffage (7), au moins une buse (9) pour l'apport de gaz de fluidisation, au moins une buse (10) pour l'apport de gaz réactionnel contenant du silicium, un dispositif (12) pour l'apport de particules germes de silicium, une conduite de soutirage de produit (14), ainsi qu'une conduite de soutirage de gaz d'échappement (16), **caractérisé en ce que** le tube de réacteur (2) comporte un segment de base (19) et au moins un segment distant (18), et un joint plat (21) en un matériau contenant du carbone est agencé entre le segment de base (19) et le segment distant (18), le segment distant (18) étant constitué d'un matériau qui présente, dans une plage de température allant de 100 à 950 °C, une conductivité thermique de < 2 W/mK.

2. Réacteur à lit fluidisé selon la revendication 1, **caractérisé en ce que** le matériau du segment distant (18) consiste en un verre de quartz.

3. Réacteur à lit fluidisé selon la revendication 1 ou 2, **caractérisé en ce que** le segment de base (19) est constitué d'un matériau qui présente, dans une plage de température allant de 500 à 1400 °C, une conductivité thermique comprise entre 20 et 100 W/mK, de préférence entre 30 et 90 W/mK, de manière particulièrement préférée entre 40 et 80 W/mK.

4. Réacteur à lit fluidisé selon l'une quelconque des revendications précédentes, **caractérisé en ce que** le matériau du segment de base (19) est choisi dans le groupe comprenant le silicium, le nitrure de silicium, le carbure de silicium, l'acier, le graphite, le carbone renforcé par des fibres de carbone et un matériau composite carbone-carbone.

5. Réacteur à lit fluidisé selon la revendication 4, **caractérisé en ce que** le matériau du segment de base (19) consiste en du graphite pressé de manière isostatique.

6. Réacteur à lit fluidisé selon l'une quelconque des revendications précédentes, **caractérisé en ce que** le segment de base (19) et/ou le segment distant (18) comprennent un revêtement.

7. Réacteur à lit fluidisé selon l'une quelconque des revendications précédentes, **caractérisé en ce que** le matériau contenant du carbone du joint plat (21) consiste en du graphite, notamment du graphite expansé.

8. Réacteur à lit fluidisé selon l'une quelconque des revendications précédentes, **caractérisé en ce que** le tube de réacteur (2) comporte un segment distant supplémentaire (24), qui se raccorde au segment de base (19), un joint plat (21) en un matériau contenant du carbone étant également agencé entre le segment de base (19) et le segment distant supplémentaire (24).

9. Réacteur à lit fluidisé selon l'une quelconque des revendications précédentes, **caractérisé en ce que** le tube de réacteur (2) est encastré entre le fond de réacteur (15) et la tête de réacteur (13).

10. Réacteur à lit fluidisé selon l'une quelconque des revendications précédentes, **caractérisé en ce qu'**un joint (22) en un matériau contenant du carbone est agencé entre le fond de réacteur (15) et le tube de réacteur (2) et/ou entre la tête de réacteur (13) et le tube de réacteur (2).

11. Réacteur à lit fluidisé selon la revendication 10, **caractérisé en ce que** le fond de réacteur (15) et/ou la tête de réacteur (13) comprennent un évidement (23) pour la réception du joint (22).

12. Réacteur à lit fluidisé selon l'une quelconque des revendications précédentes, **caractérisé en ce que** le segment de base (19) et le segment distant (18) comprennent chacun deux côtés frontaux, au moins un des côtés frontaux (25, 26), entre lesquels le joint plat (21) est agencé, comprenant un profilé (27), le joint plat (21) étant agencé derrière une paroi du profilé (27) de telle sorte qu'un côté (28), tourné vers l'intérieur du réacteur, du joint plat (21) soit tourné vers la paroi du profilé.

13. Réacteur à lit fluidisé selon l'une quelconque des revendications précédentes, **caractérisé en ce que** le segment distant (18) présente 80 à 300 %, de préférence 100 à 250 %, de manière particulièrement préférée 150 à 200 %, de l'épaisseur de paroi du segment de base (19).

14. Réacteur à lit fluidisé selon l'une quelconque des revendications précédentes, **caractérisé en ce que** le segment de base (19) présente une longueur ($L_B$) qui correspond à entre 50 et 99 %, de préférence entre 60 et 98 %, notamment entre 70 et 97 %, d'une longueur ($L_R$) du tube de réacteur (2).

Fig. 1

Fig. 2

Fig. 3

Fig. 4

Fig. 5

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 4786477 A
- US 4900411 A
- WO 2015197498 A1
- EP 2653446 A2
- WO 2017092985 A1
- WO 2014184043 A1
- WO 200240400 A1
- WO 2014099502 A1